# EUROPEAN PATENT APPLICATION

(11) **EP 4 394 478 A1**
(43) Date of publication of application: **03.07.2024**
(21) Application number: 22217144.9
(22) Date of filing: 29.12.2022
(51) Int. Cl.: G02B 21/26

(54) **CONTROLLER FOR A MICROSCOPE, MICROSCOPE SYSTEM AND CORRESPONDING METHOD**

(71) Applicant: Leica Microsystems CMS GmbH, 35578 Wetzlar (DE)
(72) Inventor: Schacht, Volker, 35578 Wetzlar (DE); Pelzer, Patric, 35578 Wetzlar (DE); Wagner, Heiko, 35578 Wetzlar (DE)
(74) Representative: Maiwald GmbH

(57) **Abstract**

The invention relates to a controller for a microscope, wherein the microscope comprises a sample stage and an imaging optic (220), wherein the sample stage is configured to receive a sample holder (230), wherein said controller is configured to: Control the microscope in a first mode, wherein in the first mode, a lateral position for all of at least two different objective lenses (222, 224) during a lateral movement is restricted to a first lateral range (234.1, 236.1) in at least one lateral direction (x, y); and Control the microscope in a second mode, wherein in the second mode, the position for all of the at least two different objective lenses (222, 224) during the lateral movement is allowed to be at least within a second lateral range (234.2, 236.2) in the at least one lateral direction (x, y), wherein the second lateral range is different from the first lateral range, and wherein in the second mode, a vertical position for all of the at least two different objective lenses during a vertical movement is restricted to a pre-defined vertical range (238.2).

## Description

### Technical Field

The present invention essentially relates to a controller for a microscope, to a microscope system comprising a microscope and such controller, and to a corresponding method.

### Background

In the fields of, e.g., biology and medicine, microscopes can be used to image and/or view samples or specimens. A typical way to provide multiple samples to be imaged are so-called multi well plates having, e.g., 96 wells for receiving samples. Such multi well plate have relatively large lateral dimensions, thus, imaging each of the samples provided in the wells might be difficult, in particular, if different objectives of the microscope are to be used. This also applies to other sample holder of large lateral dimensions.

### Summary

In view of the situation described above, there is a need for improvement in imaging samples with a microscope. According to embodiments of the invention, a controller for a microtome, a microtome system, and a corresponding method with the features of the independent claims are proposed. Advantageous further developments form the subject matter of the dependent claims and of the subsequent description.

An embodiment of the invention relates to a controller for a microscope. The microscope comprises a sample stage and an imaging optic. The sample stage is configured to receive a sample holder like a multi well plate, and the imaging optic comprises at least two different objective lenses. Further, the microscope is configured to allow selecting each of the at least two different objective lenses for imaging at least a part of the sample holder, when received in the sample stage. Further, the microscope is configured to allow a lateral movement for each of the at least two different objective lenses in at least one lateral direction relative to the sample holder, when received in the sample stage. In an embodiment, lateral movement in two (different) lateral directions are possible, typically called x- and y-direction. Further, the microscope is configured to allow a vertical movement for each of the at least two different objective lenses in a vertical direction (typically called a z-direction) relative to the sample holder, when received in the sample stage.

The controller is configured to control the microscope in a first mode, wherein in the first mode, a lateral position for all of the at least two different objective lenses during the lateral movement is restricted to a first lateral range in the at least one lateral direction. In case of two lateral directions, there can be respective first lateral ranges in both lateral directions.

Further, the controller is configured to control the microscope in a second mode, wherein in the second mode, the position for all of the at least two different objective lenses during the lateral movement is allowed to be at least within a second lateral range in the at least one lateral direction (i.e. the lateral movement can also extend to outside the second lateral range), wherein the second lateral range is different from the first lateral range. Further, in the second mode, a vertical position for all of the at least two different objective lenses during the vertical movement is restricted to a pre-defined vertical range.

As mentioned, for sample holders with large lateral extensions like multi well plates, imaging can be difficult. In particular, such sample holders typically need to be held or positioned in or on the sample stage. This results in a certain holding structure, typically at the periphery of the sample holder. A multi well plate, for example, has a so-called skirt at its periphery, by means of which skirt the multi well plate can be placed on the sample stage. When imaging the samples in the different wells of the multi well plate or when imaging different points on another sample holder, the sample holder and the objective lenses used have to be moved relative to each other in lateral directions. In an embodiment, the sample stage with the sample holder is moved, while the objective lens is fixed in lateral direction.

For focussing, the objective lens has to be moved relative to the sample stage in the vertical direction. In an embodiment, the objective lens (or part of the imaging optic carrying the objective lens) is moved, while the sample stage is fixed in vertical direction. In particular near the mentioned holding structure like the skirt of a multi well plate, this might result in that the objective lens cannot focus because the objective lens cannot move as close to the sample as necessary. When nevertheless trying to focus, this might result in damaging the sample holder. In an embodiment of the invention, the at least two different objective lenses have different shapes, and the at least two different objective lenses require different vertical positions relative to the sample holder for focussing. With two or more objective lenses, the situation can, thus, be different for the different objective lenses due to different shapes of the objective lenses. Thus, whether such damage might occur or in which area such damage might occur depends on the objective lens currently used.

By providing the two modes as mentioned, this problem is overcome because in the first mode, the lateral movement is restricted and, thus, all of the objective lenses can be prevented from focus near the periphery of the sample stage, i.e., the holding structure, for example. The risk of damaging the sample holder or the objective lens is avoided or at least reduced. A user of the microscopes does not have to care about which objective lens currently is used because the restriction applies to all objective lenses. The first lateral range can be chosen such that no damage can occur, e.g., depending on the geometrical measures of the microscope, in particular, the shape of the objective lenses, and of the sample holder.

While in the first mode, parts of the sample holder might not be imaged at all, in the second mode, other parts, preferably, more or all, of the sample holder can be imaged than in the first mode, using any of the objective lenses. Due to the restriction of the relative movement in the vertical direction, any damage can again be avoided. It is noted that this second mode might result in that focussing is not be possible for all of the objective lenses due to the restriction in the vertical direction, however, again the user of the microscopes does not have to care about which objective lens currently is used because the restriction applies to all objective lenses. The second lateral range can be chosen such that more or all of the sample holder can be imaged. The pre-defined vertical range can be chosen such that no damage can occur, e.g., depending on the geometrical measures of the microscope, in particular, the shape of the objective lenses, and of the sample holder.

In an embodiment of the invention, in the second mode, the position for all of the at least two different objective lenses during the lateral movement is restricted to the second lateral range. This means that the lateral movement is not possible outside the second lateral range. This helps avoiding any potential damage outside the second lateral range.

In an embodiment of the invention, in the first mode, the vertical position of the at least two different objective lenses during the vertical movement is allowed to be within an extended pre-defined vertical range, wherein the extended pre-defined range is larger than the pre-defined range. This allows focussing for more or all objective lenses in the first mode, compared to the second mode.

In an embodiment of the invention, the controller is further configured to receive information about, or determine, whether a sufficiency criterion is fulfilled. The sufficiency criterion comprises that the pre-defined vertical range is sufficient for all of the at least two objective lenses to focus to every point on the sample holder within the second range, when the sample holder is received in the sample stage. In case of the multi well plate, every point can correspond to the respective samples in every one of the multiple wells. Further, the controller is configured to, when in the first mode and when the sufficiency criterion is fulfilled, control a human machine interface, like a display, to provide information to a user relating to the sufficiency criterion being fulfilled for all of the at least two objectives. For example, a message can be displayed to the user that the second mode might be chosen because the second mode has a better lateral range and although vertical movement is restricted, this is sufficient to focus everywhere with every objective lens. This might depend on the specific sample holder used and its geometric measures or parameters. Alternatively of additionally, the controller is configured to, when in the first mode and when the sufficiency criterion is fulfilled, switch to control the microscope in the second mode. This allows an automatic switch from the first into the second mode. Both variants allow better usage of the microscope.

In an embodiment of the invention, the controller is further configured to control the microscope to determine information about at least one geometric parameter of the sample holder, when received in the sample stage, and to receive the information about the at least one geometric parameter of the sample holder. The controller is further configured to determine whether the sufficiency criterion is fulfilled, based on the information about the at least one geometric parameter of the sample holder. This allows automatic provision of the information to the user or automatic switch of the modes. In an embodiment, controlling the microscope to determine information about at least one geometric parameter of the sample holder comprises using an autofocus function of the microscope to determine a distance. This allows using a function typically integrated in microscopes.

In an embodiment of the invention, the controller is further configured to receive information about, or determine, whether an in-sufficiency criterion is fulfilled. The in-sufficiency criterion comprises that the pre-defined vertical range is not sufficient for at least one of the at least two objective lenses to focus to every point on the sample holder within the second range, when the sample holder is received in the sample stage. In case of the multi well plate, every point can correspond to the respective samples in every one of the multiple wells. Further, the controller is configured to, when in the second mode and when the in-sufficiency criterion is fulfilled, control a human machine interface, like a display, to provide information to a user relating to the at least one objective lens for which the in-sufficiency criterion is fulfilled. For example, a message can be displayed to the user that the objective lens with lower of two different magnifications is affected. The user can then stay with the second mode if the other objective lens is used or change the mode when the affected objective lens is used. This might depend on the specific sample holder used and its geometric measures or parameters. This allows allow better usage of the microscope.

In an embodiment of the invention, the controller is further configured to control the microscope to determine information about at least one geometric parameter of the sample holder, when received in the sample stage, and to receive the information about the at least one geometric parameter of the sample holder. The controller is further configured to determine whether the in-sufficiency criterion is fulfilled, based on the information about the at least one geometric parameter of the sample holder. This allows automatic provision of the information to the user.

In an embodiment of the invention, the sample holder is or comprises a multi well plate having multiple wells, wherein the multiple wells are distributed in the at least one lateral direction, when the sample holder is received in the sample stage. The at least one geometric parameter of the sample holder comprises at least one of: a skirt height of the multi well plate, and a distance of a bottom plate (or bottom surface) of the multi well plate from the imaging optic. This allows automatically determining whether the first mode or the second mode can be used.

In an embodiment of the invention, the controller is further configured to receive user input data relating to a selection of one of the first mode and the second mode. The controller is further configured to control a display of a human machine interface to visualize the sample holder and the first lateral range, upon selection of the first mode; and to control the display of the human machine interface to visualize the sample holder and the second lateral range, upon selection of the second mode. This allows visualization for a user to see which area of the sample holder the user can image in the respective mode.

It is noted that this aspect also can be used as a separate embodiment, without the actual control of the microscope in the first and the second mode. Since the user is provided with the relevant information as to where the objective lenses can move in lateral direction, the user can on its own take care not to leave the respective ranges. Thus, the problem of avoiding damage is also solved.

In an embodiment of the invention, the controller is further configured to control the microscope in a third mode, wherein in the third mode, a lateral position for a first one of the at least two different objective lenses during the lateral movement is restricted to the first lateral range in the at least one lateral direction. Further, a lateral position for a second one of the two different objective lenses during the lateral movement is allowed to be at least within (or might even be restricted to) the second lateral range in the at least one lateral direction. Further, a vertical position for the second one of the at least two different objective lenses during the vertical movement is restricted to the pre-defined vertical range. This third mode uses different ranges for the objective lenses, allowing each of the objective lenses to focus.

In an embodiment of the invention, the microscope comprises an objective lens turret, and the at least two different objective lenses are arranged on the objective lens turret with fixed positions relative to each other. This results in one objective lens potentially limiting the lateral movement of the other one. Thus, the proposed restriction is of particular advantage.

In an embodiment of the invention, the controller is further configured to control the microscope to perform the lateral movement for each of the at least two different objective lenses, and to control the microscope to perform the vertical movement for each of the at least two different objective lenses. This allows easy implementation of the restricted lateral movements.

Another embodiment of the relates to a microscope system comprising a microscope and the controller of any one of the embodiments described herein. The microscope comprises a sample stage and an imaging optic, wherein the sample stage is configured to receive a sample holder, and wherein the imaging optic comprises at least two different objective lenses. The microscope is configured to allow selecting each of the at least two different objective lenses for imaging at least a part of the sample holder, when received in the sample stage, and the microscope is configured to allow a lateral movement for each of the at least two different objective lenses in at least one lateral direction relative to the sample holder, when received in the sample stage. Further, the microscope is configured to allow a vertical movement for each of the at least two different objective lenses in a vertical direction relative to the sample holder, when received in the sample stage. In an embodiment, the microscope system further comprises a human machine interface.

Another embodiment of the relates to a method for controlling a microscope. The microscope comprises a sample stage and an imaging optic, wherein the sample stage is configured to receive a sample holder, and wherein the imaging optic comprises at least two different objective lenses. The microscope is configured to allow selecting each of the at least two different objective lenses for imaging at least a part of the sample holder, when received in the sample stage, and the microscope is configured to allow a lateral movement for each of the at least two different objective lenses in at least one lateral direction relative to the sample holder, when received in the sample stage. Further, the microscope is configured to allow a vertical movement for each of the at least two different objective lenses in a vertical direction relative to the sample holder, when received in the sample stage.

The method comprising the following steps: Controlling the microscope, upon selection of a first mode, in the first mode, wherein in the first mode, a lateral position for all of the at least two different objective lenses during the lateral movement is restricted to a first lateral range in the at least one lateral direction; and Controlling the microscope, upon selection of a second mode, in the second mode, wherein in the second mode, the position for the two different objective lenses during the lateral movement is allowed to be at least within a second lateral range in the at least one lateral direction, wherein the second lateral range is different from the first lateral range. Further, in the second mode, a vertical position for all of the at least two different objective lenses during the vertical movement is restricted to a pre-defined vertical range.

As to further embodiments and advantages of the microscope system and the method, it is referred to the description above for the controller, which applies here correspondingly.

A further embodiment of the invention relates to a computer program with a program code for performing one or more of the methods of above, when the computer program is run on a processor.

Further advantages and embodiments of the invention will become apparent from the description and the appended figures.

It should be noted that the previously mentioned features and the features to be further described in the following are usable not only in the respectively indicated combination, but also in further combinations or taken alone, without departing from the scope of the present invention.

### Short description of the Figures

- Fig. 1: schematically shows a microscope system according to an embodiment of the invention;
- Fig. 2a: schematically shows a sample holder for illustrating an embodiment of the invention;
- Fig. 2b: schematically shows sample holder for illustrating an embodiment of the invention;
- Fig. 3a: schematically shows a display for illustrating an embodiment of the invention;
- Fig. 3b: schematically shows a display for illustrating an embodiment of the invention;
- Fig. 4: schematically shows a method according to an embodiment of the invention in a flow diagram.

### Detailed Description

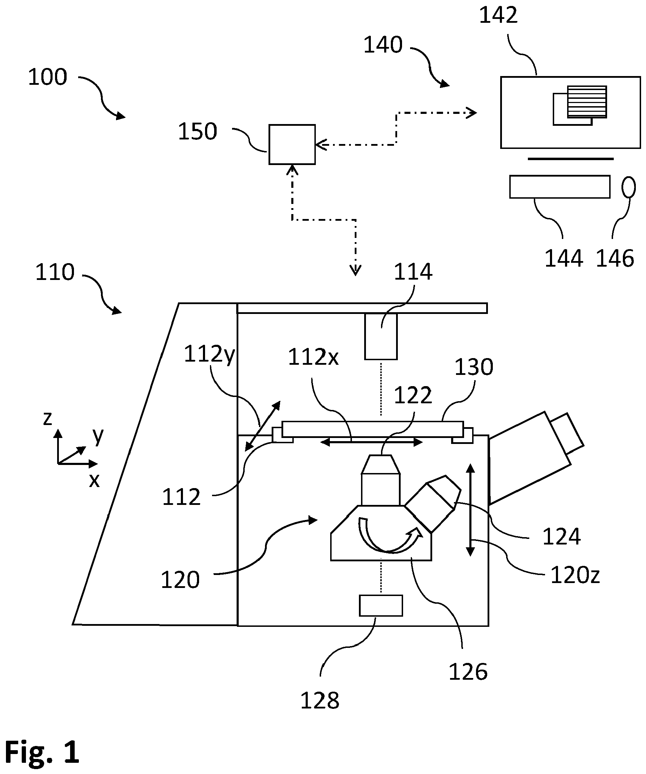

Fig. 1 schematically illustrates a microscope system 100 according to an embodiment of the invention. The microscope system 100 comprises a microscope 110, a controller (or computer system) 150 for the microscope, and a human machine interface 140. The human machine interface 140 comprises, in an embodiment, a display 142, a keyboard 144 and a computer mouse 146. It is noted that other kinds of human machine interfaces can be used, for example a touch display. Also, the human machine interface or part of it could be integrated into the microscope 110, for example.

The microscope 110 comprises a sample stage 112 and an imaging optic 120. The sample stage 112 is configured to receive a sample holder 130, and the imaging optic 120 comprises, in an embedment, two different objective lenses 122, 124. Further, the imaging optic 120 can comprise an objective lens turret 126, and the objective lenses 122, 124 can be arranged on the objective lens turret with fixed positions to each other. It is noted that the imaging optic 120 could comprise more than two different objective lenses.

Further, the imaging optic can comprise an imaging sensor 128 which is configured to acquire images from a sample on the sample holder 130 via one of the objective lenses 122, 124. Further, the microscope 110 can comprise an illumination source or illumination optic 114 which is configured to illuminate a sample or multiple samples on or in the sample holder 130.

Further, the microscope 110 is configured to allow selecting each of the two different objective lenses 122, 124 for imaging at least a part of the sample holder 130, when received in the sample stage 112. In the situation shown in Fig. 1, objective lens 122 is selected. Thus, objective lens 122 is placed in the imaging beam. Upon selection, the objective lens 124 could be placed in the imaging beam. In order to achieve this, the objective lens turret 126, for example, can be rotated as is illustrated by means of a swung arrow.

Further, the microscope 110 is configured to allow a lateral movement for each of the at least two different objective lenses 122, 124 in at least one lateral direction relative to the sample holder 130, when received in the sample stage 112. In the example shown in Fig. 1, the sample stage 112 is able to perform a lateral movement 112x in x-direction and a lateral movement 112y in y-direction, i.e., the microscope 110 is configured to allow a lateral movement for each of the two different objective lenses 122, 124 in two lateral directions relative to the sample holder 130.

Further, the microscope 110 is configured to allow a vertical movement for each of the at least two different objective lenses 122, 124 in a vertical direction relative to the sample holder 130, when received in the sample stage 112. In the example shown in Fig. 1, the objective lens turret 126, together with the two objective lenses 122, 124, is able to perform a vertical movement 120z in z-direction, i.e., the microscope 110 is configured to allow a vertical movement for each of the two different objective lenses 122, 124 in the vertical direction relative to the sample holder 130.

It is noted that the relative movements between sample stage and the objective lenses, in lateral and vertical directions is of importance, irrespective of which component might be fixed and which component movable. Nevertheless, the example shown in Fig. 1 is a typical way to implement this.

It is noted that the two lateral directions x, y and the vertical direction z are illustrated by and used according to a typical Cartesian coordinate system and typical definition of what lateral (in a plane where the microscope stands, defined by a desk, for example) and vertical direction (where focussing is made, in a direction perpendicular to the plane where the microscope stands). However, other ways of defining the directions would be possible as long as the different directions are different from each other.

The controller 150 can be used to control the microscope 110 and, for example, also to control the human machine interface 140, i.e., controlling the display 142 to visualize or display information, for example. Also, the controller 150 can receive control signals from the human machine interface 140, e.g., the keyboard 144 and the computer mouse 146, which in turn allows the controller 150 to control the microscope 110.

Further, the controller 150 is configured to control the microscope 110 in a first mode. In the first mode, a lateral position for all of the different objective lenses (22, 124 during the lateral movement 112x, 112y is restricted to a first lateral range in the at least one lateral direction.

Further, the controller 150 is configured to control the microscope 110 in a second mode. In the second mode, the position for all of the different objective lenses 122, 124 during the lateral movement 112x, 112y is allowed to be at least within a second lateral range in the at least one lateral direction. The second lateral range is different from the first lateral range. Further, in the second mode, a vertical position for all of the different objective lenses 122, 124 during the vertical movement is restricted to a pre-defined vertical range.

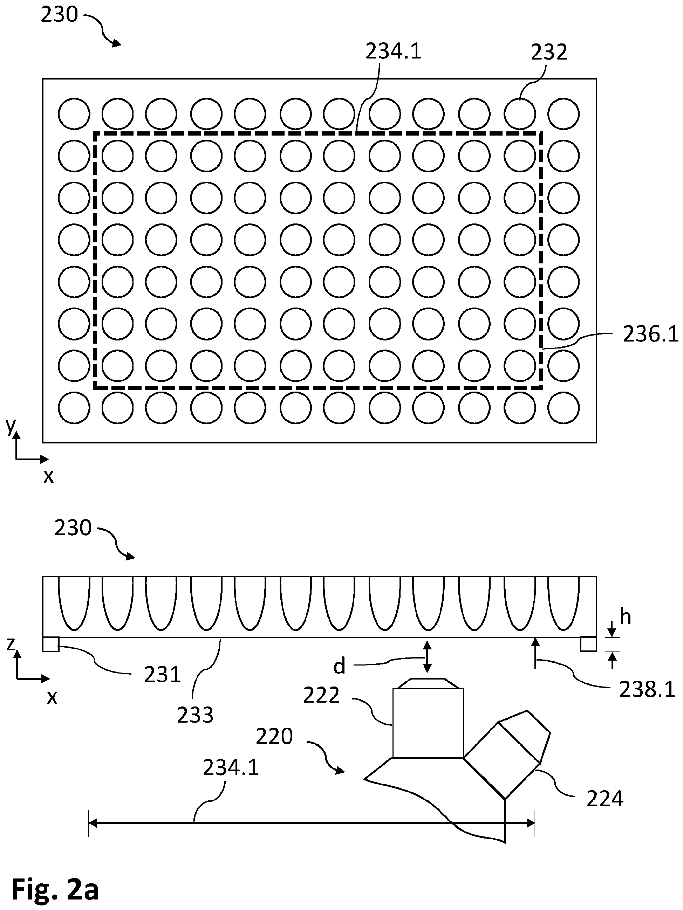

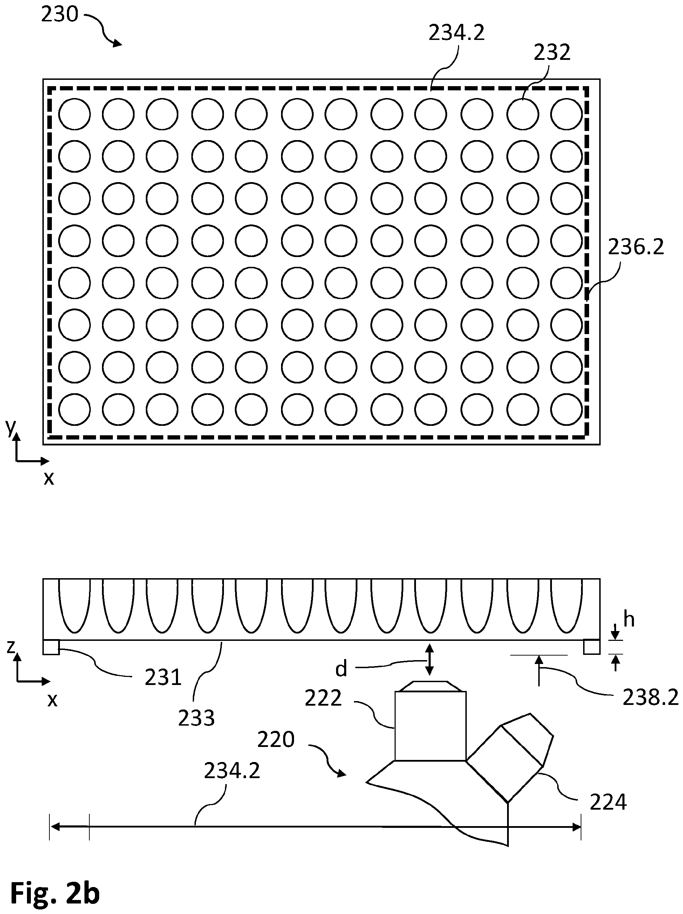

The two modes, first mode and second mode, will be explained in more detail with respect to Figs. 2a, 2b.

Fig. 2a schematically shows a sample holder 230 for illustrating an embodiment of the invention. The sample holder 230 is, by means of example, a multi well plate having 96 wells 232. Each well 232 can be used to place a sample in it. The sample holder 230 can be used as the sample holder 130 in Fig. 1, for example.

The upper part of Fig. 2a illustrates a top view of the sample holder 230, showing the 96 wells 232 extending along the lateral directions x and y. It is noted that the number of wells can be different but 96 is (among others) a number of wells of standard multi well plates. Other numbers of wells for standard multi well plates are, for example, 6, 12 24, 48, 384 or 1536.

The lower part of Fig. 2a illustrates a side view of the sample holder 230, showing wells in the x-direction in cross sections and with their height in the vertical direction, the z-direction. In addition, an imaging optic 220 or part of it, comprising two objective lenses 222, 224, is shown below the sample holder 230. Imaging optic 220 and its objective lenses can correspond to imaging optic 120 of Fig. 1 and its objective lenses. Other than in Fig. 1, objective lenses 222, 224 are shown having different shape. Typically, different objective lenses in a microscope are used to allow for different magnification. An objective lens with higher magnification typically has a different shape than an objective lens with lower magnification. However, also other reasons can result in different shapes of different objective lenses.

Further, in the lower part of Fig. 2a, at the lower left and right side of the sample holder 230, which is a multi well plate, a skirt 231 of the multi well plate 230 is shown. Such skirt 231 typically surrounds the multi well plate at its periphery. By means of such skirt 231, a multi well plate can be placed on the sample stage of the microscope, note that the sample stage typically has an opening and the multi well plate is placed, with its skirt, at a support margin or the like of the sample stage.

As can be seen from the lower part of Fig. 2b, the objective lens 222 can be brought very close to a lower surface or bottom plate 233 of the multi well plate 230, near the inner wells. At the outermost wells, the objective lens 222 cannot be brought such close to the bottom plate 233 due to the skirt 231. The geometry of the objective lens 222 prevents the objective lens 222 to come such close. Rather, this would result in a collision of the objective lens 222 with the sample holder 230 and could even lead to damage.

In the first mode the lateral position for all of the different objective lenses 222, 224, during the lateral movement is restricted to a first lateral range 234.1 in x direction and 236.1 the y-direction. This first lateral range is shown as rectangle in the upper part of Fig. 2a. The rectangle, i.e., the first lateral range, is such that it encompasses all of the wells but the outermost ones. In other words, 60 of the 96 wells are within the first lateral range. The first lateral range 234.1 in x direction is also illustrated in the lower part of Fig. 2a.

Due to this restriction in lateral movement, the objective lense 222 cannot be brought such far to the periphery of the multi well plate 230 that focussing would result in a collision. The vertical movement is, e.g., not restricted but possible at least within an extended pre-defined vertical range 238.1 For example, this extended pre-defined vertical range 238.1 allows moving the objective lens 222 almost to the bottom plate 233.

As can be seen from the lower part of Fig. 2a, if the other objective lens 224 would be selected and be in place of the objective lens 222, this objective lens 224 possibly could be moved closed to the bottom plate 223 to focus on the outermost well without collision.

However, lateral movement is restricted also for this objective lens. This results in that a user does not need to take care about which objective lens can be used where.

It is noted that the shape of the objective lens 222 and the skirt 231 as potentially colliding without the restriction of the lateral movement, is an example for illustration only. Other geometric features might have impact. For example, other parts of the sample holder than the skirt 231 can have an impact. Also, other objective lenses might have an impact; for example, objective lens 224 might collide with the skirt when the objective lens 222 is brought very close to the bottom plate 233 near the third well from the outside. In this case, the first lateral range would have to be adapted.

Thus, while the first lateral range 234.1, 236.1 is illustrated as a rectangle, it might be of other shape like a bulky shape. For example, a corner of such rectangle might be rounded or the like. Nevertheless, it is also possible to use a first lateral range in the shape of a rectangle in such cases which, however, would then be smaller (e.g., a rectangle fitted into a bulky shape).

It is further noted that the first lateral range 234.1, 236.1 indicates or encloses the area with points to which all objective lenses can focus without collision. The controller, thus, makes sure not to cause any relative movement between objective lenses and sample stage in lateral direction which would leave the first lateral range 234.1, 236.1. For example, the controller can stop the lateral movement when the first lateral range 234.1, 236.1 is reached. It is further noted that the first lateral range 234.1, 236 does not need to be such that it only encompasses full wells. Also, parts of wells might be included.

In case of sample holders other than multi well plates, the first lateral range 234.1, 236.1 defines an area with points to which all the objective lenses can focus.

Fig. 2b schematically shows the sample holder 230 of Fig. 2a, for both, the upper and the lower part of Figs. 2a, 2b. Also, imaging optic 220 with objective lenses 222, 224 is shown.

In the second mode, the lateral position for all of the different objective lenses 222, 224, during the lateral movement is at least allowed within a second lateral range 234.2 in x direction and 236.2 the y-direction. The lateral movement can also be restricted to the second lateral range.

This second lateral range is shown as rectangle in the upper part of Fig. 2b. The rectangle, i.e., the second lateral range, is such that it encompasses all of the wells. In other words, all of the 96 wells are within the second lateral range. The second lateral range 234.2 in x direction is also illustrated in the lower part of Fig. 2b.

Further, in the second mode, a vertical position for all of the different objective lenses 222, 224 during the vertical movement is restricted to a pre-defined vertical range 238.2. The pre-defined vertical range is less than the extended pre-defined vertical range 238.1 shown in Fig. 2a. This means the objective lenses 222, 224 cannot move as close to the bottom plate 233 as in the first mode. This, however, also means that the objective lenses can easily move to the region of the outermost well without any risk of colliding with the skirt 231.

It is noted that the fact that the objective lenses 222, 224 cannot move as close to the bottom plate 233 as in the first mode, does not mean that the objective lenses cannot focus. It might very well be that some objective lenses still can focus to higher parts of the sample in the well (i.e., higher in z-direction) but not to lower parts. This can be sufficient for particular tasks.

It is noted that the pre-defined vertical range 238.1 can be chosen or defined such that collision is prevented for all of the objective lenses and one or all of more different sample holders like multi well plates. In an embodiment, the pre-defined vertical range 238.1 could also be chosen depending on the actual sample holder used and its geometric parameters like the skirt height.

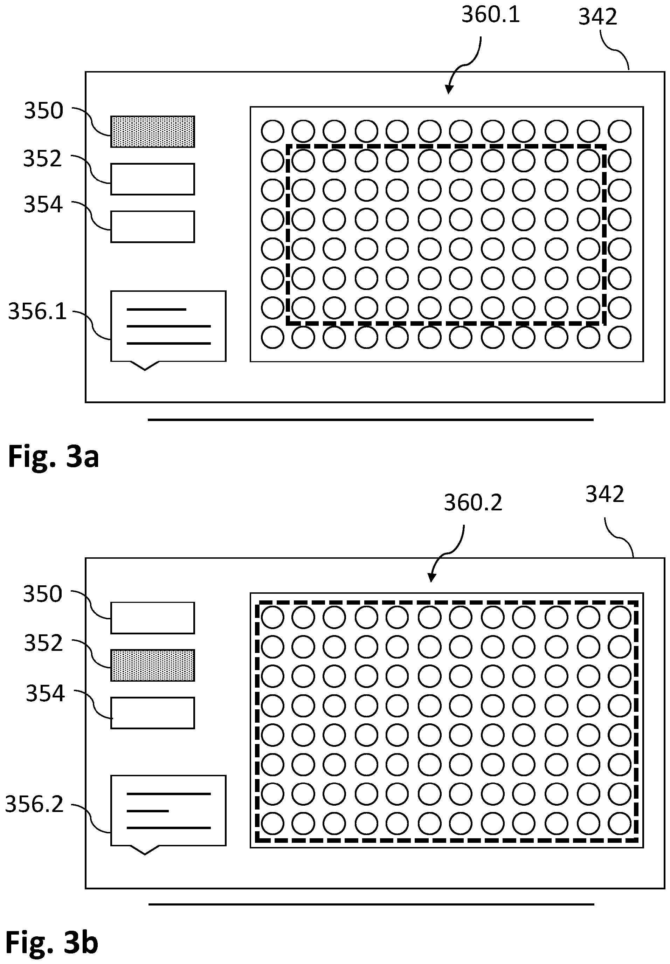

Figs. 3a and 3b each show a display 342 for illustrating further embodiments of the invention. Display 342 can be, for example, display 142 of Fig. 1 or part of another human machine interface. By means of example, three software buttons 350, 352, 354 are rendered on display 342, in each of Figs. 3a and 3b. These software buttons allow selection different modes. For example, software button 350 allows (e.g., by clicking onto it) selecting the first mode, software button 352 allows (e.g., by clicking onto it) selecting the second mode, and software button 354 allows (e.g., by clicking onto it) selecting the third mode. It is noted that any other selection or switching means other than software buttons could be used.

The first and second mode correspond to the ones described with respect to Figs. 2a, 2b. In the third mode, a lateral position for a first one of the different objective lenses, e.g., objective lens 222 of Figs. 2a, 2b, during the lateral movement is restricted to the first lateral range 234.1, 236.1 in the lateral directions x and y. A lateral position for a second one of the different objective lenses, e.g., objective lens 224 of Figs 2a, 2b, during the lateral movement is allowed to be at least within (or is even restricted) to the second lateral range in the lateral directions x and y. A vertical position for the second one of the different objective lenses during the vertical movement is restricted to the pre-defined vertical range 238.2. In this mode, the ranges are chosen individually for the objective lenses.

In an embodiment, the controller 150 is configured to receive user input data relating to a selection of one of the first mode and the second mode. This can be the case via selecting one of the software buttons 350 or 352, for example. The controller 150 is further configured to control a display like display 342 of a human machine interface to visualize the sample holder and the first lateral range, upon selection of the first mode. This situation is illustrated in Fig. 3a, with software button 350 for the first mode being highlighted (it has been selected) and an image 360.1 shown on the display 342 with the sample holder and the first range (this corresponds to the situation shown in the upper part of Fig. 2a).

The controller 150 is further configured to control the display of the human machine interface to visualize the sample holder and the second lateral range, upon selection of the second mode. This situation is illustrated in Fig. 3b, with software button 352 for the second mode being highlighted (it has been selected) and an image 360.2 shown on the display 342 with the sample holder and the second range (this corresponds to the situation shown in the upper part of Fig. 2b).

In this way, the user of the microscope can easily be informed about the ranges possible with the objective lenses in the currently selected mode.

In an embodiment, the controller 150 is configured to receive information about, or determine, whether a sufficiency criterion is fulfilled, wherein the sufficiency criterion comprises that the pre-defined vertical range 238.2 is sufficient for all of the at least two objective lenses to focus to every point on the sample holder within the second range, when the sample holder is received in the sample stage. This means it might be the case that in the situation shown in Fig. 2b, all objective lenses can focus to every well or the sample therein. This could be the case if the geometric parameters of the objective lenses and/or the sample holder are different in a particular case. For example, a specific multi well plate with low skirt height might be used.

Then, when in the first mode (like shown in Figs. 2a or 3a, with limited lateral range) and when the sufficiency criterion is fulfilled, the controller 150 is configured control a human machine interface like the one shown in Fig. 1 or Figs. 3a, 3b to provide information to a user relating to the sufficiency criterion being fulfilled for all of the at least two objective lenses. For example, a message 356.1 like shown in Fig. 3a might be displayed on the display 342 that the second mode might be chosen because the second mode has a better lateral range and although vertical movement is restricted, this is sufficient to focus everywhere with every objective lens.

Alternatively of additionally, the controller is configured to, when in the first mode and when the sufficiency criterion is fulfilled, control the microscope in the second mode, i.e. automatically switch from the first mode to the second mode.

In an embodiment, the controller 150 is configured to control the microscope to determine information about at least one geometric parameter of the sample holder 230, when received in the sample stage. Such geometric parameter can be a height h of the skirt (so-called skirt height), or a distance d of the bottom plate 233 from the imaging optic 220 or a part thereof. Both geometric parameters are illustrated by means of example in Figs. 2a, 2b. The controller 150 is further configured to receive the information about the at least one geometric parameter of the sample holder; and to determine whether the sufficiency criterion is fulfilled, based on the information about the at least one geometric parameter of the sample holder.

In an embodiment, the distance d, for example, can be determined by means of autofocusing features or an autofocus function. The objective lens currently in use, for example, can be used to automatically focus onto the bottom plate 233 in order to determine the distance d. It is noted that the distance d can be determined in relation to a known reference point of or in the imaging optic. From the distance d, knowing further geometric parameters of the microscope, in particular the sample stage, the skirt height could also be derived. In this way, the information provided (or display) por the switch from the first to the second mode can be triggered.

In an embodiment, the controller 150 is further configured to receive information about, or determine, whether an in-sufficiency criterion is fulfilled, wherein the in-sufficiency criterion comprises that the pre-defined vertical range 238.2 is not sufficient for at least one of the at least two objective lenses to focus to every point on the sample holder within the second range, when the sample holder is received in the sample stage. This means it might be the case that in the situation shown in Fig. 2b only objective lens 222 cannot or not very far focus to every well or the sample therein.

Then, when in the second mode (like shown in Figs. 2b or 3b) and when the in-sufficiency criterion is fulfilled, the controller 150 is configured control a human machine interface like the one shown in Fig. 1 or Figs. 3a, 3b to provide information to a user relating to the at least one objective lens for which the in-sufficiency criterion is fulfilled. For example, a message 356.2 might be displayed on the display 342, informing the user about which of the objective lenses are affected from the range limit. IN the case of Figs. 2a, 2b this might be objective lens 222, for example. Thus, the user can decide whether to stay in the second mode or to switch to the first mode, depending on the needs and the objective lens to use.

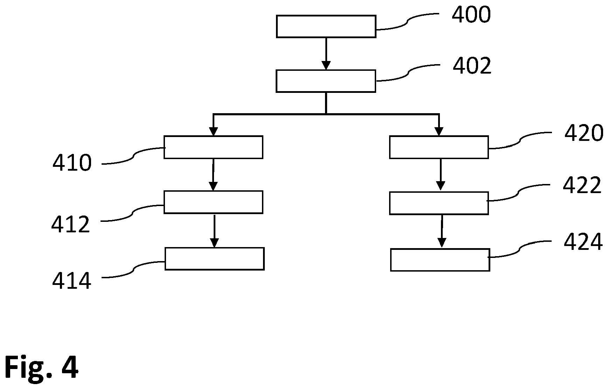

Fig. 4 schematically illustrates a method according to an embodiment of the invention in a flow diagram. The method is for controlling a microscope, wherein the microscope comprises a sample stage and an imaging optic, wherein the sample stage is configured to receive a sample holder, wherein the imaging optic comprises at least two different objective lenses. Further, the microscope is configured to allow selecting each of the at least two different objective lenses for imaging at least a part of the sample holder, when received in the sample stage. Further, the microscope is configured to allow a lateral movement for each of the at least two different objective lenses in at least one lateral direction relative to the sample holder, when received in the sample stage. Further, the microscope is configured to allow a vertical movement for each of the at least two different objective lenses in a vertical direction relative to the sample holder, when received in the sample stage. In an embodiment, the microscope can be the microscope 110 of Fig. 1 as described above.

The method comprises the following steps. In a step 400, user input 402 is received, which user input relates to a selection of one of the first mode 410 and the second 420 mode; this has been described with respect to Figs. 3a, 3b, for example. Further, in a step 412, the microscope is controlled, upon selection of the first mode 410, in the first mode. In the first mode, a lateral position for all of the two different objective lenses during the lateral movement is restricted to a first lateral range in the at least one lateral direction.

In an embodiment, in a step 414, a display of a human machine interface is controlled to visualize the sample holder and the first lateral range, upon selection of the first mode 410; this has been described with respect to Fig. 3a.

Further, in a step 422, the microscope is controlled, upon selection of the second mode 420, in the second mode. In the second mode, the position for the at least two different objective lenses during the lateral movement is allowed to be at least within a second lateral range in the at least one lateral direction, wherein the second lateral range is different from the first lateral range, and a vertical position for all of the at least two different objective lenses during the vertical movement is restricted to a pre-defined vertical range.

In an embodiment, in a step 424, a display of a human machine interface is controlled to visualize the sample holder and the second lateral range, upon selection of the second mode 420; this has been described with respect to Fig. 3b.

Further steps or further embodiments of the method correspond to the embodiments described in relation to the controller and microscope system above.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Some embodiments relate to a microscope comprising a system as described in connection with one or more of the Figs. 1 to 4. Alternatively, a microscope may be part of or connected to a system as described in connection with one or more of the Figs. 1 to 4. Fig. 1 shows a schematic illustration of a system or microscope system 100 configured to perform a method described herein. The system 100 comprises a microscope 110 and a computer system or controller 150. The microscope 110 is configured to take images and is connected to the computer system 150. The computer system 150 is configured to execute at least a part of a method described herein. The computer system 150 may be configured to execute a machine learning algorithm. The computer system 150 and microscope 110 may be separate entities but can also be integrated together in one common housing. The computer system 150 may be part of a central processing system of the microscope 110 and/or the computer system 150 may be part of a subcomponent of the microscope 110, such as a sensor, an actor, a camera or an illumination unit, etc. of the microscope 110.

The computer system 150 may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system 150 may comprise any circuit or combination of circuits. In one embodiment, the computer system 150 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g. camera) or any other type of processor or processing circuit. Other types of circuits that may be included in the computer system 150 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 150 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 150 may also include a display device, one or more speakers, and a keyboard and/or controller, which can include a mouse, trackball, touch screen, voice-recognition device, or any other device that permits a system user to input information into and receive information from the computer system 105.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

### List of Reference Signs

- 100: microscope system
- 110: microscope
- 112: sample stage
- 112x, 112y: lateral movement
- 114: light source
- 120: imaging optic
- 120z: vertical movement
- 122, 124, 222, 224: objective lenses
- 126: objective lens turret
- 130, 230: sample holder
- 140: human machine interface
- 142, 342: display
- 144: keyboard
- 146: computer mouse
- 150: controller

- 232: well
- 231: skirt
- 233: bottom plate
- 234.1, 236.1: first lateral range
- 234.2, 236.2: second lateral range
- 238.1: extended pre-defined vertical range
- 238.2: pre-defined vertical range

- 350, 352, 354: software buttons
- 356.1, 356.2: messages
- 360.1, 360.2: images

- 400, 412, 414, 422, 424: method steps
- 402: user input data
- 410: first mode
- 420: second mode

- d: distance
- h: skirt height
- x, y, z: directions

## Claims

1. A controller (150) for a microscope (110), wherein the microscope (110) comprises a sample stage (112) and an imaging optic (120, 220), wherein the sample stage (112) is configured to receive a sample holder (130, 230), wherein the imaging optic (120, 220) comprises at least two different objective lenses (122, 124, 222, 224),
wherein the microscope (110) is configured to allow selecting each of the at least two different objective lenses (122, 124, 222, 224) for imaging at least a part of the sample holder (130, 230), when received in the sample stage (112),
wherein the microscope (110) is configured to allow a lateral movement (112x, 112y) for each of the at least two different objective lenses (122, 124, 222, 224) in at least one lateral direction (x, y) relative to the sample holder (130), when received in the sample stage (112),
wherein the microscope (110) is configured to allow a vertical movement for each of the at least two different objective lenses (122, 124, 222, 224) in a vertical direction (z) relative to the sample holder (130, 230), when received in the sample stage (112),
wherein said controller (150) is configured to:
Control the microscope (110) in a first mode (410), wherein in the first mode, a lateral position for all of the at least two different objective lenses (122, 124, 222, 224) during the lateral movement is restricted to a first lateral range (234.1, 236.1) in the at least one lateral direction (x, y); and
Control the microscope (110) in a second mode (420), wherein in the second mode, the position for all of the at least two different objective lenses (122, 124, 222, 224) during the lateral movement is allowed to be at least within a second lateral range (234.2, 236.2) in the at least one lateral direction (x, y), wherein the second lateral range is different from the first lateral range, and
wherein in the second mode (420), a vertical position for all of the at least two different objective lenses (122, 124) during the vertical movement is restricted to a pre-defined vertical range (238.2).

2. The controller (150) of claim 1, wherein in the second mode (420), the position for all of the two different objective lenses (122, 124) during the lateral movement is restricted to the second lateral range (234.2, 236.2).

3. The controller (150) of claim 1 or 2, wherein, in the first mode (410), the vertical position of the at least two different objective lenses (122, 124, 222, 224) during the vertical movement is allowed to be within an extended pre-defined vertical range (238.1), wherein the extended pre-defined range is larger than the pre-defined range (238.2).

4. The controller (150) of any one of the preceding claims, further configured to:
Receive information about, or determine, whether a sufficiency criterion is fulfilled, wherein the sufficiency criterion comprises that the pre-defined vertical range (238.2) is sufficient for all of the at least two objective lenses (122, 124, 222, 224) to focus to every point on the sample holder within the second range, when the sample holder is received in the sample stage; and
when in the first mode (410) and when the sufficiency criterion is fulfilled, control a human machine interface (140) to provide information (356.1) to a user relating to the sufficiency criterion being fulfilled for all of the at least two objectives, or
when in the first mode and when the sufficiency criterion is fulfilled, switch to control the microscope in the second mode.

5. The controller (150) of claim 4, further configured to:
Control the microscope (110) to determine information about at least one geometric parameter (d, h) of the sample holder (130, 230), when received in the sample stage;
Receive the information about the at least one geometric parameter (h) of the sample holder; and
Determine whether the sufficiency criterion is fulfilled, based on the information about the at least one geometric parameter of the sample holder.

6. The controller (150) of any one of the preceding claims, further configured to:
Receive information about, or determine, whether an in-sufficiency criterion is fulfilled, wherein the in-sufficiency criterion comprises that the pre-defined vertical range (238.2) is not sufficient for at least one of the at least two objective lenses to focus to every point on the sample holder within the second range, when the sample holder is received in the sample stage; and
when in the second mode (420) and when the in-sufficiency criterion is fulfilled, control a human machine interface (140) to provide information to a user relating to the at least one objective lens for which the in-sufficiency criterion is fulfilled.

7. The controller (150) of claim 6, further configured to:
Control the microscope (110) to determine information about at least one geometric parameter (d, h) of the sample holder (130, 230), when received in the sample stage;
Receive the information about the at least one geometric parameter d, (h) of the sample holder; and
Determine whether the in-sufficiency criterion is fulfilled, based on the information about the at least one geometric parameter of the sample holder.

8. The controller (150) of claim 5 or 7, wherein the sample holder (130, 230) is or comprises a multi well plate having multiple wells (232), wherein the multiple wells (232) are distributed in the at least one lateral direction (x, y), when the sample holder (130, 230) is received in the sample stage (112), and
wherein the at least one geometric parameter (h) of the sample holder comprises at least one of: a skirt height of the multi well plate (230), and a distance of a bottom plate of the multi well plate (230) from the imaging optic.

9. The controller (150) of any one of the preceding claims, further configured to:
Receive (400) user input data (410) relating to a selection of one of the first mode (410) and the second mode (420);
Control (414) a display (142, 342) of a human machine interface (140) to visualize the sample holder (130, 230) and the first lateral range, upon selection of the first mode; and
Control the display (342) of the human machine interface to visualize the sample holder and the second lateral range, upon selection of the second mode.

10. The controller (150) of any one of the preceding claims, further configured to:
Control the microscope (110) in a third mode, wherein in the third mode, a lateral position for a first one of the at least two different objective lenses (122, 124, 222, 224) during the lateral movement is restricted to the first lateral range (234.1, 236.1) in the at least one lateral direction (x, y),
a lateral position for a second one of the at least two different objective lenses (122, 124) during the lateral movement is allowed to be at least within to the second lateral range in the at least one lateral direction (x, y), and
a vertical position for the second one of the at least two different objective lenses (122, 124) during the vertical movement is restricted to the pre-defined vertical range (238.2).

11. The controller (150) of any one of the preceding claims, wherein the at least two different objective lenses (122, 124) have different shapes, and wherein the at least two different objective lenses require different vertical positions relative to the sample holder for focussing.

12. A controller (150) for a microscope (110), wherein the microscope (110) comprises a sample stage (112) and an imaging optic (120), wherein the sample stage (112) is configured to receive a sample holder (130), wherein the imaging optic (120) comprises at least two different objective lenses (122, 124, 222, 224),
wherein the microscope (110) is configured to allow selecting each of the at least two different objective lenses (122, 124, 222, 224) for imaging at least a part of the sample holder (130), when received in the sample stage (112),
wherein the microscope (110) is configured to allow a lateral movement for each of the at least two different objective lenses (122, 124, 222, 224) in at least one lateral direction (x, y) relative to the sample holder (130, 230), when received in the sample stage (112),
wherein the microscope (110) is configured to allow a vertical movement for each of the at least two different objective lenses (122, 124, 222, 224) in a vertical direction (z) relative to the sample holder (130, 230), when received in the sample stage (112),
wherein said controller (150) is configured to:
Receive user input data relating to a selection of one of a first mode (410) and a second mode (420),
wherein in the first mode, a lateral position for all of the two different objective lenses (122, 124, 222, 224) during the lateral movement is restricted to a first lateral range (234.1, 236.1) in the at least one lateral direction (x, y);
wherein in the second mode, the position for the two different objective lenses (122, 124, 222, 224) during the lateral movement is allowed to be at least within a second lateral range (234.2, 236.2) in the at least one lateral direction (x, y), wherein the second lateral range is different from the first lateral range, and
wherein in the second mode, a vertical position for all of the at least two different objective lenses (122, 124) during the vertical movement is restricted to a pre-defined vertical range (238.2).
Control a display (142, 342) of a human machine interface (140) to visualize the sample holder (130, 230) and the first lateral range, upon selection of the first mode; and
Control the display (142, 342) of the human machine interface to visualize the sample holder and the second lateral range, upon selection of the second mode.

13. A microscope system (100) comprising a microscope (110) and the controller (150) of any one of the preceding claims,
wherein the microscope (110) comprises a sample stage (112) and an imaging optic (120), wherein the sample stage (112) is configured to receive a sample holder (130, 230), wherein the imaging optic (120, 220) comprises at least two different objective lenses (122, 124, 222, 224),
wherein the microscope (110) is configured to allow selecting each of the at least two different objective lenses (122, 124, 222, 224) for imaging at least a part of the sample holder, when received in the sample stage,
wherein the microscope (110) is configured to allow a lateral movement for each of the at least two different objective lenses (122, 124, 222, 224) in at least one lateral direction relative to the sample holder, when received in the sample stage,
wherein the microscope (110) is configured to allow a vertical movement for each of the at least two different objective lenses in a vertical direction relative to the sample holder, when received in the sample stage.

14. A method for controlling a microscope (110), wherein the microscope (110) comprises a sample stage (112) and an imaging optic (120, 220), wherein the sample stage (112) is configured to receive a sample holder (130, 230), wherein the imaging optic (120, 220) comprises at least two different objective lenses (122, 124, 222, 224),
wherein the microscope (110) is configured to allow selecting each of the at least two different objective lenses (122, 124, 222, 224) for imaging at least a part of the sample holder (130, 230), when received in the sample stage (112),
wherein the microscope (110) is configured to allow a lateral movement for each of the at least two different objective lenses (122, 124, 222, 224) in at least one lateral direction (x, y) relative to the sample holder (130, 230), when received in the sample stage (112),
wherein the microscope (110) is configured to allow a vertical movement for each of the at least two different objective lenses (122, 124, 222, 224) in a vertical direction (z) relative to the sample holder (130), when received in the sample stage (112),
said method comprising the following steps:
Controlling (412) the microscope (110), upon selection of a first mode (410), in the first mode, wherein in the first mode, a lateral position for all of the two different objective lenses (122, 124, 222, 224) during the lateral movement is restricted to a first lateral range (234.1, 234.1) in the at least one lateral direction (x, y); and
Controlling (422) the microscope (110), upon selection of a second mode (420), in the second mode, wherein in the second mode, the position for the at least two different objective lenses (122, 124, 222, 224) during the lateral movement is allowed to be at least within a second lateral range (234.2, 236.2) in the at least one lateral direction (x, y), wherein the second lateral range is different from the first lateral range, and
wherein in the second mode, a vertical position for all of the at least two different objective lenses (122, 124, 222, 224) during the vertical movement is restricted to a pre-defined vertical range (238.2).

15. A computer program with a program code for performing the method of claim 14, when the computer program is run on a processor.
